# DEMANDE DE BREVET EUROPEEN

(11) **EP 1 158 249 A2**
(43) Date de publication de la demande: **28.11.2001**
(21) Numéro de dépôt: 01112432.8
(22) Date de dépôt: 22.05.2001
(51) Int. Cl.: F24D 17/00, G05D 23/19, C02F 1/02

(54) **Procédé pour l'obtention d'une action antibactérienne dans les chauffe-eau electriques à accumulation d'eau sanitaire et dispositif électronique pour l'application du dit procédé**

(30) Priorité: 24.05.2000 BE 200000347
(71) Demandeur: MTS Technical S.A., 5020 Malonne (BE)
(72) Inventeur: Xhonneux, Alain, 5020 Malonne (BE); Geuten, Francis, 5020 Malonne (BE)
(74) Mandataire: Guareschi, Antonella

(57) **Abrégé**

L'invention entre dans le domaine des procédés et des dispositifs correspondants pour l'obtention d'un nettoyage thermique antibactérien de l'eau sanitaire contenue dans les chauffe-eau électriques à accumulation. Une logique intelligente et dotée de mémoire, assemblée sur une carte électronique (1), permet au procédé de gérer automatiquement l'action citée de nettoyage antibactérien.

## Description

### DESCRIPTION DE L'INVENTION

L'objet de la présente invention est un procédé et le dispositif électronique correspondant pour l'obtention d'une action antibactérienne dans des chauffe-eau électriques à accumulation.

Dans les appareils à accumulation destinés au réchauffement de l'eau à usage sanitaire, la quantité d'eau stockée constitue une volumétrie importante et, surtout, la température de cette masse d'eau s'avère être toujours très variable en raison des usages les plus disparates qui peuvent être faits tous les jours de l'eau chaude accumulée.

Les paramètres suivant lesquels est choisie la température de l'eau accumulée sont influencés par différents facteurs parmi lesquels on peut souligner aussi bien la nécessité de compter sur une quantité importante d'eau à une température élevée, que de la nécessité d'éviter une température capable de provoquer des brûlures, que le fait de savoir qu'au-dessous d'une certaine température le dépôt de calcaire reste plutôt limité, et que, naturellement, le souhait de réaliser des économies.

Il est évident que le nombre et la variabilité des facteurs énumérés ci-dessus sont rendus plus complexes par le fait qu'ils sont incompatibles.

On peut toutefois affirmer, sans trop se tromper, que l'utilisateur est généralement porté à utiliser une eau sanitaire présentant une température de 50/60 degrés C environ.

A ces températures peut naître le problème de la prolifération bactérienne à l'intérieur de la masse stockée dans les réchauffeurs correspondants: en effet, l'eau fournie par les sociétés de distribution présente toujours des bactéries de nature différente, malgré le fait que cette eau passe à travers des systèmes appropriés de purification.

Ces bactéries, bien qu'elles soient présentes en quantité très limitée, une fois qu'elles se trouvent à l'intérieur du réservoir du réchauffeur à accumulation, peuvent y trouver un environnement favorable à leur prolifération et leur dangerosité augmente, même beaucoup, si leur concentration dépasse certains niveaux.

Un exemple typique de ces bactéries est la "legionella pneumophilia", qui s'avère très agressive et dangereuse pour l'organisme humain, lorsqu'elle atteint certaines valeurs de concentration.

Cette bactérie présente, en outre, également d'autres caractéristiques sur la base desquelles sa dangerosité peut augmenter remarquablement: cette charge bactérienne, en effet, résiste jusqu'à une température de 65 degrés C et se multiplie très rapidement jusqu'à une température de 50/55 degrés C.

Il est donc évident qu'une charge bactérienne comme celle que l'on vient de mentionner présente une dangerosité importante précisément aux températures d'utilisation auxquelles est utilisée l'eau sanitaire provenant des réservoirs des appareils de réchauffement spéciaux.

Les solutions contre ce problème de pollution bactérienne ont été jusqu'à présent peu nombreuses.

Dans certains Pays, comme par exemple la France, on prépare et on applique déjà des réglementations d'installation des réchauffeurs qui prévoient une température d'accumulation non inférieure à 60 degrés C. Cette solution présente l'inconvénient que l'utilisateur n'est plus en mesure de gérer son réchauffeur de manière autonome et de plus, elle présente l'inconvénient d'une consommation inutile d'énergie.

Une autre solution adoptée est celle d'un nettoyage chimique de l'intérieur du réservoir du réchauffeur moyennant l'utilisation de produits spécifiques: cette solution comporte certains inconvénients, comme la nécessité de recourir à des entreprises spécialisées ainsi qu'un coût plutôt élevé.

Le but de la présente invention est de réaliser le nettoyage de l'intérieur des réservoirs des appareils réchauffeurs à accumulation d'eau sanitaire des charges bactériennes, en utilisant un dispositif électronique piloté par un microprocesseur, associé à un thermostat électronique.

En particulier, le procédé pour l'obtention d'une action antibactérienne pour les chauffe-eau électriques à accumulation qui forment l'objet de la présente invention, est caractérisé par le fait qu'à l'intérieur des chauffe-eau cités est automatiquement activé un cycle de réchauffement à une température de "n" degrés et que ce cycle de réchauffement est automatiquement activé tous les "x" jours.

Cette caractéristique et d'autres sont mieux mises en évidence grâce à la description suivante faite en référence à une forme de réalisation préférée illustrée uniquement à titre d'exemple non limitatif par les tables de dessin ci-jointes, sur lesquelles:
- la figure 1 illustre le tracé de circuitation sur une carte électronique;
- la figure 2 illustre la disposition des principaux éléments opérationnels présents sur un côté de la dite carte électronique;
- la figure 3 illustre la disposition d'autres éléments opérationnels présents sur le côté opposé de la même carte électronique.

A présent on décrit le procédé qui forme l'objet de la présente invention.

L'utilisateur peut choisir deux modes différents d'introduire une valeur de température de "n" degrés C: le premier mode consiste à fixer une température prédéterminée, par exemple 75 degrés C qui, en raison du fait qu'elle est plutôt élevée, présente l'avantage de permettre un nettoyage thermique efficace sur pratiquement toutes les espèces de charges bactériennes normalement présentes dans l'eau sanitaire.

Un deuxième mode d'opérer pour l'utilisateur consiste dans le fait de laisser que la température "n" soit choisie automatiquement en fonction de la température moyenne de fonctionnement utilisée dans le dernier cycle de nettoyage.

Egalement pour ce qui concerne le nombre "x" des jours s'écoulant entre un cycle de nettoyage et le suivant, l'utilisateur a la possibilité d'opérer de deux modes différents: le premier mode consiste à fixer un intervalle prédéfini de jours capable de garantir, quoi qu'il en soit, un nettoyage efficace; par exemple, un intervalle de 21 jours est considéré comme suffisant en moyenne.

Ou bien, faire en sorte que l'intervalle de "x" jours soit automatiquement choisi aussi bien sur la base de la température moyenne de fonctionnement utilisée dans le dernier cycle de nettoyage qu'en fonction du degré de prolifération des différentes charges bactériennes à cette température.

Il est important de remarquer que le procédé qui forme l'objet de la présente invention peut assurer à l'utilisateur l'exécution automatique du cycle de nettoyage thermique même si la température maximale demandée par l'utilisateur est inférieure à la valeur "n".

Un premier avantage offert par le procédé qui forme l'objet de la présente invention est l'assurance que les cycles de nettoyage thermique, une fois qu'on a choisi la procédure opérationnelle, seront quoi qu'il en soit exécutés en cas d'oubli de la part de l'utilisateur.

Un autre avantage est constitué par le fait que l'utilisateur pourra maintenir plutôt basse la température normale de stockage de l'eau sanitaire à l'intérieur du chauffe-eau, avec des avantages économiques évidents, et avoir en même temps l'assurance d'un nettoyage antibactérien efficace.

Un dispositif électronique pour l'obtention d'une action antibactérienne pour chauffe-eau électriques à accumulation d'eau sanitaire est caractérisé par le fait qu'il est constitué par une carte électronique associée à un thermostat électronique; la dite carte comprend au moins les éléments essentiels suivants:
- un microprocesseur;
- un relais de commande apte à piloter au moins une résistance électrique de l'élément qui réchauffe l'eau sanitaire;
- un potentiomètre apte au réglage de la température de l'eau sanitaire que contient le chauffe-eau; ce relais étant accessible à l'utilisateur;
- une sonde de mesure de la température de l'eau sanitaire; cette carte pouvant comprendre également les éléments supplémentaires suivants et non indispensables au fonctionnement de la carte même:

- une DEL verte apte à la signalisation du bon fonctionnement du dispositif électronique même et d'une protection efficiente de la chaudière d'un chauffe-eau;
- une DEL rouge apte à la signalisation des anomalies de fonctionnement;
- une pluralité de DELs blanches aptes à la signalisation du contenu énergétique d'un chauffe-eau;
- un transformateur de diminution du courant apte à l'alimentation du dispositif électronique et apte également à fournir un courant de protection de la chaudière du chauffe-eau;
- une deuxième sonde de mesure de la température;
- un connecteur rapide apte à la connexion des sondes de mesure de la température;
- un connecteur rapide apte à la connexion d'une batterie de chargement des piles;
- un connecteur rapide apte à la connexion de l'anode et de la chaudière pour la transmission de la signalisation de l'état du fonctionnement du dispositif de protection cathodique de la chaudière même;
- un bouton de remise à l'état initial, le dit bouton permettant à un installateur d'activer la procédure d'auto-diagnostic.

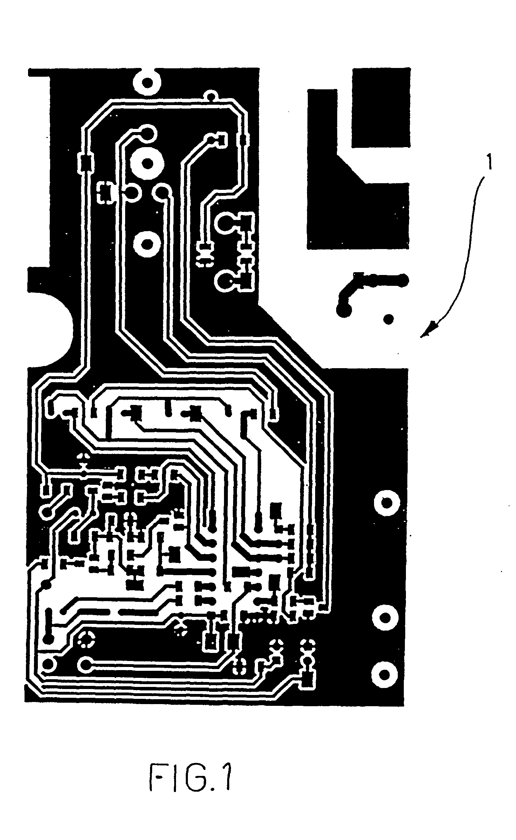

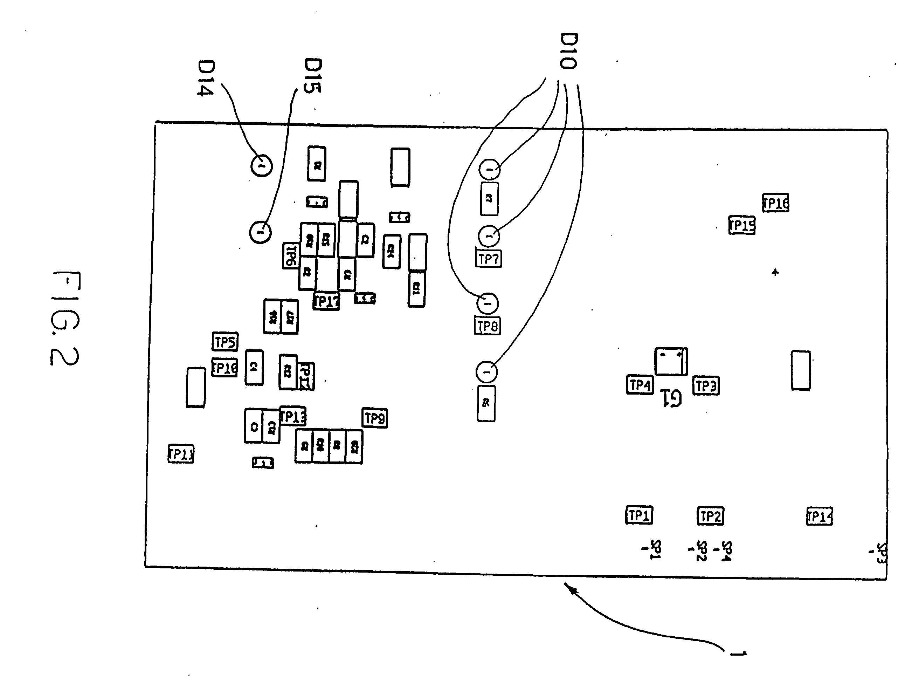

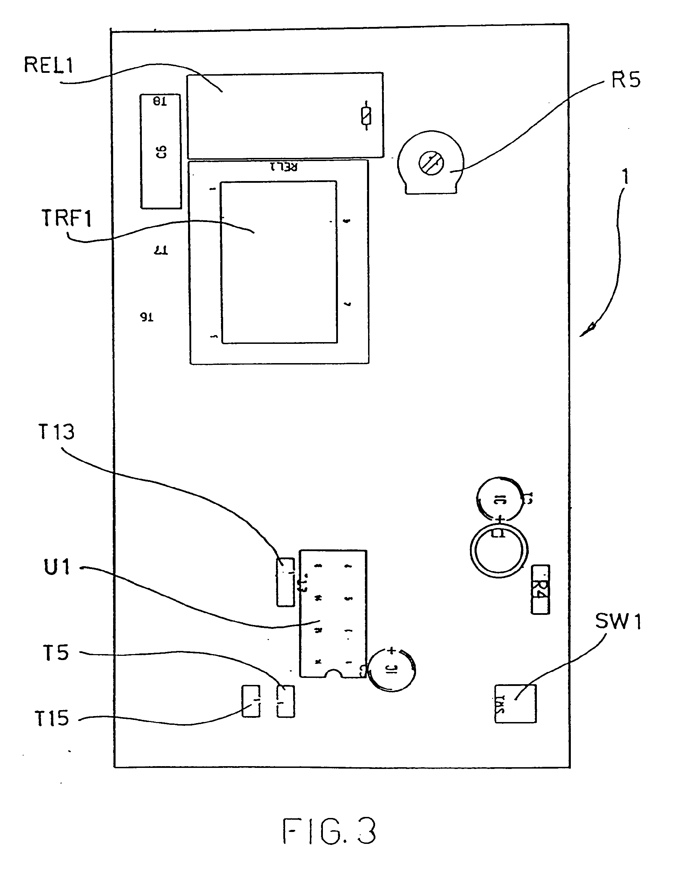

En décrivant le dispositif illustré dans les figures 1, 2, et 3, par 1 on a indiqué une carte électronique.

D14 et D15 sont deux DELS, respectivement verte et rouge, indicatives de l'état de fonctionnement du dispositif même.

Quatre DELs de couleur blanche D10 indiquent le contenu énergétique du chauffe-eau.

Un transformateur TRF1 est apte aussi bien à alimenter la carte électronique 1 qu'à garantir la protection anticorrosion de type anodique à la chaudière du chauffe-eau dont l'élément chauffant, constitué d'au moins une résistance électrique, est piloté par un relais de commande REL1.

Un potentiomètre R5 permet la programmation de la température finale de l'eau contenue dans le chauffe-eau; cette programmation est accessible à l'utilisateur.

Un microprocesseur U1 constitue l'intelligence dotée de mémoire du présent dispositif et contient la totalité du logiciel de pilotage du dispositif même.

Une série de connecteurs rapides T13, T15 et T5 permet la connexion de la carte 1, respectivement, à deux sondes de mesure de la température, à une batterie de chargement des piles d'un type connu, à l'anode et à la chaudière du chauffe-eau.

On fait remarquer que la carte 1 pourrait également ne contenir que l'ensemble constitué par le microprocesseur U1, par le relais REL1, par le potentiomètre R5 et par au moins une sonde de température; le dit ensemble simplifié étant tout de même en mesure de rendre opérationnel le procédé pour l'obtention d'une action antibactérienne décrite précédemment.

A présent on décrit le fonctionnement du dispositif électronique qui forme l'objet de la présente invention, en suivant les références indiquées dans les figures.

Lorsque le chauffe-eau est en fonction, l'allumage continu de la DEL verte D14 signale un fonctionnement sans anomalies, par exemple aussi bien de la carte électronique 1 que de la protection anticorrosion efficace de la chaudière qui contient l'eau sanitaire à chauffer.

Au cas où une anomalie de fonctionnement d'une nature quelconque se manifesterait, la DEL rouge D15 normalement éteinte s'allumerait.

Les deux DELs citées peuvent également fonctionner en clignotant; ce fait indiquerait deux types de problèmes différents; dans ce cas, la fréquence de l'intermittence du clignotement sera différente suivant la nature du problème qui s'est présenté.

Il faut remarquer que le fonctionnement à intermittence cité des deux DELs D14 et D15 ne se produit que si on appuie sur la touche de remise à l'état initial SW1 dans le but de commencer une procédure d'auto-diagnostic.

L'utilisateur peut intervenir personnellement pour la programmation de la température maximale souhaitée de l'eau sanitaire à laquelle effectuer un cycle de nettoyage et il effectue la dite intervention par l'intermédiaire du réglage du potentiomètre R5.

La dite intervention de l'utilisateur est la seule disponible pour ce dernier, car tout le fonctionnement du dispositif électronique qui forme l'objet de la présente invention est géré automatiquement par le microprocesseur U1.

A chaque cycle de nettoyage du chauffe-eau, la mémoire dont est doté le microprocesseur cité permet une comparaison immédiate et automatique avec les données de fonctionnement du cycle précédent.

Durant le réchauffement de l'eau sanitaire contenue dans le chauffe-eau, l'utilisateur peut voir si les valeurs différentes et croissantes du contenu énergétique de l'eau sanitaire, c'est à dire, en définitive, la température atteinte par cette dernière, sont atteintes, grâce à l'allumage des quatre DELs blanches D10 en correspondance des quatre valeurs différentes et croissantes de la valeur du contenu énergétique du chauffe-eau: par exemple, chacune des DELs citées s'allumera au moment où une fraction énergétique correspondant à 25% du total auquel peut parvenir le chauffe-eau est atteinte.

Il faut noter que la facilité de réalisation de tous les câblages de la carte électronique 1 aussi bien vers les sondes de mesure de la température, que vers la batterie de chargement des piles, que de l'anode et de la chaudière du chauffe-eau est assurée par un dispositif anti-erreur approprié.

Un avantage offert par le dispositif électronique qui forme l'objet de la présente invention est constitué par le fait que la logique dotée de mémoire du microprocesseur U1 permet la comparaison, à chaque cycle de nettoyage, avec le cycle précédent, rendant ainsi possible une optimisation des paramètres opérationnels dans l'opération antibactérienne.

Un autre avantage est offert par la possibilité de rendre la carte capable de gérer des fonctions supplémentaires en installant simplement un microprocesseur doté de possibilités opérationnelles plus importantes.

A ce propos, au cours de la description, on a uniquement parlé de la fonction d'action antibactérienne du procédé et du dispositif électronique correspondant, qui forment l'objet de la présente invention, mais la même carte, uniquement par l'intermédiaire d'un microprocesseur plus évolué, pourrait également produire, de manière avantageuse, par exemple, une adaptation de la période de prélèvement d'énergie électrique à partir du réseau de distribution.

## Revendications

1. Un procédé pour l'obtention d'une action antibactérienne pour chauffe-eau électriques à accumulation; le dit procédé étant du type à nettoyage thermique, **caractérisé par le fait qu'**à l'intérieur des chauffe-eau cités, est automatiquement activé un cycle de réchauffement à une température de "n" degrés et que le dit cycle de réchauffement est automatiquement activé automatiquement tous les "x" jours.

2. Un procédé comme celui de la revendication 1), **caractérisé par le fait que** la valeur de "n" peut être prédéterminée de manière à correspondre à une température capable de réduire les charges bactériennes les plus communes et dangereuses à l'intérieur des dispositifs d'accumulation de l'eau chaude sanitaire; une température dotée d'une telle propriété peut être, par exemple, une température de 75 degrés C.

3. Un procédé comme celui de la revendication 1), **caractérisé par le fait que** la valeur "n" peut être prédéterminée également de manière à correspondre à une température calculée en fonction de la température moyenne de fonctionnement du chauffe-eau.

4. Un procédé comme celui de la revendication 1), **caractérisé par le fait que** la valeur "x" peut être prédéterminée en fonction d'un nombre prédéfini de jours de manière à assurer une fréquence suffisante de nettoyage efficace des dispositifs d'accumulation de l'eau chaude sanitaire.

5. Un procédé comme celui de la revendication 1), **caractérisé par le fait que** la valeur "x" peut être prédéterminée également suivant un nombre de jours calculé en fonction aussi bien de la température moyenne de fonctionnement du dernier cycle automatique de réchauffement effectué et que du degré de prolifération bactérienne à cette température.

6. Un procédé comme celui de la revendication 1), **caractérisé par le fait que** le cycle automatique de réchauffement d'action antibactérienne n'est réalisé que si la température maximale demandée par l'utilisateur est inférieure à la valeur "n".

7. Un dispositif électronique pour l'obtention d'une action antibactérienne pour chauffe-eau électriques à accumulation d'eau sanitaire, **caractérisé par le fait qu'**il est constitué par une carte électronique (1) associée à un thermostat électronique; la dite carte comprend au moins les éléments essentiels suivants:
un microprocesseur (U1);
un relais de commande (REL1) apte à piloter au moins une résistance électrique de l'élément qui réchauffe l'eau sanitaire;
un potentiomètre (R5) apte au réglage de la température de l'eau sanitaire que contient le chauffe-eau; le dit relais étant accessible à l'utilisateur;
une sonde de mesure de la température de l'eau sanitaire; cette carte pouvant comprendre également les éléments supplémentaires suivants et non indispensables au fonctionnement de la carte même:
une DEL verte (D14) apte à la signalisation du bon fonctionnement du dispositif électronique même et d'une protection efficiente de la chaudière d'un chauffe-eau;
une DEL rouge (D15) apte à la signalisation des anomalies de fonctionnement;
une pluralité de DELs blanches (D10) aptes à la signalisation du contenu énergétique d'un chauffe-eau;
un transformateur de diminution du courant (TRF1) apte à l'alimentation du dispositif électronique et apte également à fournir le courant de protection de la chaudière du chauffe-eau;
une deuxième sonde de mesure de la température;
un connecteur rapide (T13) apte à la connexion des sondes de mesure de la température;
un connecteur rapide (T15) apte à la connexion d'une batterie de chargement des piles;
un connecteur rapide (T5) apte à la connexion de l'anode et de la chaudière pour la transmission de la signalisation de l'état du fonctionnement du dispositif de protection cathodique de la chaudière même;
un bouton de remise à l'état initial (SW1), le dit bouton permettant à un installateur d'activer la procédure d'auto-diagnostic.

8. Un dispositif comme celui de la revendication 7), **caractérisé par le fait que** la DEL verte D14 est normalement allumée; elle peut également être clignotante dans le but d'indiquer l'existence de deux problèmes techniques différents quand on actionne le bouton de remise à l'état initial (SW1); le rythme de l'intermittence étant dans ce cas différent suivant le problème technique.

9. Un dispositif comme celui de la revendication 7), **caractérisé par le fait que** la DEL rouge D15 est normalement éteinte; elle peut également clignoter dans le but d'indiquer l'existence de deux problèmes quand on actionne le bouton de remise à l'état initial (SW1); le rythme de l'intermittence étant dans ce cas différent suivant le problème technique.

10. Un dispositif comme celui de la revendication 7), **caractérisé par le fait qu'**à chacune des DELs blanches (D10) correspond une valeur de pourcentage bien déterminée du contenu énergétique du chauffe-eau; par exemple, à la première des DELs (D10) peut correspondre une valeur de 25% du maximum jusqu'à arriver à la valeur de 100% signalée par la dernière des DELs (D10) citées.

11. Un dispositif comme celui de la revendication 7), **caractérisé par le fait que** les relais (REL1) sont au nombre de trois dans le cas d'une utilisation de courant électrique triphasé.

12. Un dispositif comme celui de la revendication 7) , **caractérisé par le fait que** le potentiomètre (R5) est doté d'un moyen approprié apte à forcer le fonctionnement durant une période limitée de vingt-quatre heures en cas de pannes.

13. Un dispositif comme celui de la revendication 7), **caractérisé par le fait que** le microprocesseur (U1) contient tout le logiciel de pilotage; le dit microprocesseur étant doté d'une mémoire, cette mémoire étant apte à l'enregistrement du cycle de nettoyage antibactérien de la période précédente.

14. Un dispositif comme celui de la revendication 7), **caractérisé par le fait que** les connecteurs rapides (T13, T15, T5) sont tous dotés de moyens aptes à éviter des erreurs de montage de ces derniers.

15. Un dispositif comme celui de la revendication 7), **caractérisé par le fait que** ce dernier peut permettre l'exécution simultanée de fonctions opérationnelles supplémentaires comme, par exemple, une fonction d'adaptation de la période de prélèvement d'énergie électrique à partir du réseau, grâce à la présence d'un microprocesseur doté de capacités opérationnelles plus étendues.
